# EUROPÄISCHE PATENTANMELDUNG

(11) **EP 2 187 138 A2**
(43) Veröffentlichungstag der Anmeldung: **19.05.2010**
(21) Anmeldenummer: 09013933.8
(22) Anmeldetag: 06.11.2009
(51) Int. Cl.: F24D 19/10

(54) **Heizkessel und Verfahren zum Betrieb eines Heizkessels**

(30) Priorität: 12.11.2008 DE 102008056994
(71) Anmelder: Viessmann Werke GmbH & Co. KG, 35107 Allendorf (DE)
(72) Erfinder: Klausmann, Werner, Dr., 35083 Wetter (DE); Dönges, Roger, 35110 Frankenau (DE)
(74) Vertreter: Wolf, Michael

(57) **Zusammenfassung**

Die Erfindung betrifft einen Heizkessel und ein Verfahren zum Betrieb eines Heizkessels, umfassend einen im Betrieb ein heißes Abgas abgebenden Brenner (3), einen vom Abgas umströmten Primärwärmetauscher (1) und einen nachgeschaltet vom Abgas umströmten Sekundärwärmetauscher (2), wobei der Primär-(1) und der Sekundärwärmetauscher (2) einen Teil eines Heizkreises (4) bilden. Nach der Erfindung ist vorgesehen, dass am Heizkreis (4) zur hydraulischen Auskopplung des Sekundärwärmetauschers (2) aus dem Heizkreis (4) bei Stillstand des Brenners (3) ein Stellventil (5) vorgesehen ist.

## Beschreibung

Die Erfindung betrifft einen Heizkessel gemäß dem Oberbegriff des Patentanspruchs 1 und ein Verfahren zum Betrieb eines Heizkessels gemäß dem Oberbegriff des Patentanspruchs 13.

Ein Heizkessel der eingangs genannten Art wird beispielsweise von der Anmelderin unter der Produktbezeichnung VITOPLEX® und VITOTRANS® hergestellt, angeboten und verkauft (alternativ siehe auch die DE 10 2006 001 590 A1). Ein solcher Niedertemperaturheizkessel mit Nachschaltwärmetauscher besteht aus einem im Betrieb ein heißes Abgas abgebenden Öl- oder Gasbrenner, einem vom Abgas umströmten Primärwärmetauscher und einem nachgeschaltet vom Abgas umströmten Sekundärwärmetauscher (Nachschaltwärmetauscher), wobei der Primär- und der Sekundärwärmetauscher einen Teil eines Heizkreises bilden. Der Sekundärwärmetauscher dient dabei zur Auskopplung der nach dem ersten Wärmetauscher immer noch im Abgas enthalteten Restwärme (Brennwertnutzung).

Typischerweise ist ein solcher Heizkessel wie folgt mit dem erwähnten Heizkreis verschaltet: Das aus dem Gebäude zurückkommende, am so genannten Rücklauf anstehende Heizkreiswasser wird zunächst dem Sekundärwärmetauscher zugeführt. Es durchströmt den Sekundärwärmetauscher und wird dann zum Primärwärmetauscher weitergeleitet. Dort wird es weiter aufgeheizt und gelangt schließlich über den so genannten Vorlaufanschluss in den Heizkreis zurück, wobei dieser zur Umwälzung des Heizkreiswassers selbstverständlich und in bekannter Weise mit mindestens einer Heizkreispumpe versehen ist.

Diese insoweit auch aus der EP 0 678 186 B1 bekannte Lösung (siehe insbesondere Figur 20) hat sich an sich gut bewährt.

Der Erfindung liegt die Aufgabe zugrunde, den Wirkungsgrad eines Heizkessels der eingangs genannten Art zu steigern.

Diese Aufgabe ist mit einem Heizkessel der eingangs genannten Art durch die im Kennzeichen des Patentanspruchs 1 aufgeführten Merkmale gelöst. Verfahrensmäßig lösen die Merkmale des Kennzeichens des Patentanspruchs 13 diese Aufgabe.

Gegenständlich ist nach der Erfindung ist also am Heizkreis zur hydraulischen Auskopplung des Sekundärwärmetauschers aus dem Heizkreis bei Stillstand des Brenners ein Stellventil vorgesehen bzw. erfindungsgemäß wird der Sekundärwärmetauscher bei Stillstand des Brenners hydraulisch aus dem Heizkreis ausgekoppelt.

Mit anderen Worten ausgedrückt, wird mittels des Stellventils erfindungsgemäß dafür gesorgt, dass das vom Heizkreisrücklauf kommende Heizkreiswasser bei Brennerstillstand nicht mehr durch den Sekundärwärmetauscher (vorzugsweise ein Wendelrohrwärmetauscher), sondern nur noch direkt durch den Primärwärmetauscher (ebenfalls vorzugsweise ein Wendelrohrwärmetauscher) geführt wird. Erfindungsgemäß wird somit zwar auf einen gewissen Anteil an Restwärme (übertragen im Sekundärwärmetauscher) verzichtet, dafür kann aber der Vorteil genutzt werden, dass durch die Auskopplung des Sekundärwärmetauschers der hydraulische Widerstand im Heizkreis sinkt.

Dabei wird das Stellventil vorzugsweise mit einer gewissen zeitlichen Verzögerung nach dem Ausschalten des Brenners betätigt, um mit dem Sekundärwärmetauscher noch Wärme aus dem abströmenden Restabgas nutzen zu können. Sobald der Brenner wieder eingeschaltet ist, wird auch der Sekundärwärmetauscher mittels des Stellventils wieder in den Heizkreis eingebunden, wobei die Betätigung des Stellventils vorzugsweise direkt über die Brennerregelung erfolgt.

Der Vollständigkeit halber wird noch auf die DE 100 33 942 A1 hingewiesen, die allerdings nicht den erfindungsgemäßen Gedanken offenbart, den Sekundärwärmetauscher mittels des Stellventils bei Stillstand des Brenners hydraulisch aus dem Heizkreis auszukoppeln.

Andere vorteilhafte Weiterbildungen ergeben sich aus den abhängigen Patentansprüchen.

Der erfindungsgemäße Heizkessel einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: schematisch einen Verschaltungsplan des erfindungsgemäßen Heizkessels;
- Figur 2: perspektivisch eine bevorzugte Ausführungsform des Stellventils mit eingebundenem Sekundärwärmetauscher; und
- Figur 3: das als Kugelventil ausgebildete Stellventil gemäß Figur 2 bei abgekoppeltem Sekundärwärmetauscher.

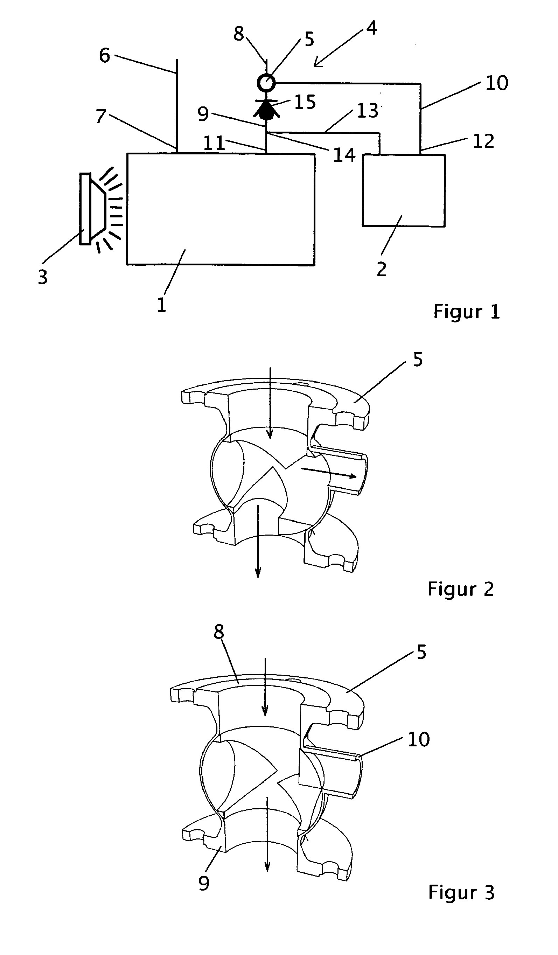

In Figur 1 ist der erfindungsgemäße Heizkessel der Übersichtlichkeit halber schematisch dargestellt. Dieser besteht in an sich bekannter Weise aus einem im Betrieb ein heißes Abgas abgebenden Brenner 3 (Öl- oder Gasbrenner oder dergleichen), einem vom Abgas umströmten Primärwärmetauscher 1 und einem nachgeschaltet vom Abgas umströmten Sekundärwärmetauscher 2, wobei der Primär- 1 und der Sekundärwärmetauscher 2 einen Teil eines Heizkreises 4 bilden.

Erfindungswesentlich ist nun, dass am Heizkreis 4 zur hydraulischen Auskopplung des Sekundärwärmetauschers 2 aus dem Heizkreis 4 bei Stillstand des Brenners 3 ein Stellventil 5 vorgesehen ist.

Wie üblich, weist der Heizkreis 4 einen Vorlaufanschluss 6 auf, wobei dieser hydraulisch mit einem Vorlaufanschluss 7 des Primärwärmetauscher 1 verbunden ist.

Weiterhin weist der Heizkreis 4 einen Rücklaufanschluss 8 aufweist, wobei das Stellventil 5 besonders bevorzugt am Rücklaufanschluss 8 angeordnet ist.

Weiter präzisiert ist bevorzugt vorgesehen, dass das am Rücklaufanschluss 8 angeordnete Stellventil 5 eine erste hydraulische Verbindungsleitung 9 zum Primärwärmetauschers 1 und eine zweite hydraulische Verbindungsleitung 10 zum Sekundärwärmetauscher 2 aufweist, wobei die erste hydraulische Verbindungsleitung 9 mit einem Rücklaufanschluss 11 des Primärwärmetauschers 1 und die zweite hydraulische Verbindungsleitung 10 mit einem Rücklaufanschluss 12 des Sekundärwärmetauschers 2 verbunden ist.

Ferner ist der Sekundärwärmetauscher 2 (über seinen Vorlaufanschluss) über eine dritte Verbindungsleitung 13 mit der ersten Verbindungsleitung 9 zwischen dem Stellventil 5 und dem Primärwärmetauscher 1 verbunden, wobei die dritte Verbindungsleitung 13 an einer Verbindungsstelle 14 in die erste Verbindungsleitung 9 ausmündend ausgebildet ist.

Um bei Öffnungsstellung des Stellventils 5 zur zweiten Verbindungsleitung 10 einen Rückfluss von der dritten Verbindungsleitung 13 zum Stellventil 5 unterbinden zu können, ist zwischen dem Stellventil 5 und der Verbindungsstelle 14 ein eine Strömung in Richtung Stellventil 5 unterbindendes Rückschlagventil 15 (vorzugsweise eine einfach Rückschlagklappe) angeordnet.

Das besagte Stellventil 5 ist mit Verweis auf die Figuren 2 und 3 besonders bevorzugt als Kugelventil ausgebildet. Weiterhin ist vorgesehen, dass das Stellventil 5 mit einer am Heizkessel angeordneten Heizungsregelung verschaltet ist, sprich diese betätigt je nach Brennerzustand (an bzw. aus) dieses Ventil.

Der erfindungsgemäße Heizkessel funktioniert, wie folgt (siehe auch den Verfahrensanspruch 13): Ist der Brenner 3 eingeschaltet, strömt Abgas sowohl durch den Primär- 1 als auch durch den Sekundärwärmetauscher 2. In diesem Fall fällt also auch am Sekundärwärmetauscher 2 eine gewisse Wärmemenge an, die dem Heizkreis 4 zugeführt werden soll. Deshalb wird das Stellventil 5 so eingestellt, dass Heizkreiswasser sowohl in die erste Verbindungsleitung 9 als auch in die zweite Verbindungsleitung 10 strömen kann. Diesen Fall zeigt Figur 2, wobei das Heizkreiswasser in diesem Fall den Sekundärwärmetauscher 2 durchströmt und dann über die dritte Verbindungsleitung 13, die Verbindungsstelle 14 und die erste Verbindungsleitung 9 in den Primärwärmetauscher 1 strömen kann. Eine Rückströmung zum Stellventil 5 ist, wie beschrieben, über das Rückschlagventil 15 ausgeschlossen, wobei gleichzeitig über das Stellventil 5 vom Rücklaufanschluss 8 kommendes Heizkreiswasser auch direkt über die Verbindungsleitung 9 zum Primärwärmetauscher 1 strömen kann.

Wird der Brenner 3 nun abgeschaltet, wird das Stellventil 5 - so wie in Figur 3 dargestellt - (über die Heizungsregelung) geschaltet. In diesem Zustand kann das Heizkreiswasser nur noch direkt über die Verbindungsleitung 9 in den Primärwärmetauscher 1 strömen. Der Sekundärwärmetauscher 2 wird in diesem Zustand nicht mehr durchströmt, d. h., da dort kein nutzbarer Wärmeaustausch mehr stattfindet, kann erfindungsgemäß gleichzeitig der Durchströmwiderstand erheblich gesenkt werden, was insgesamt, wie entsprechende Versuche gezeigt haben, zu einer Wirkungsgradsteigerung führt.

Nochmals mit anderen Worten ausgedrückt, ist bevorzugt vorgesehen, dass das Stellventil 5 in einer ersten Stellung den Rücklaufanschluss 8 des Heizkreises 4 ausschließlich mit dem Primärwärmetauscher 1 und in einer zweiten Stellung sowohl mit dem Primär- 1 als auch mit dem Sekundärwärmetauscher 2 verbindend ausgebildet ist.

Etwa gleichzeitig mit einem Neustart des Brenners 3 wird dann wieder das Stellventil 5 in die in Figur 2 dargestellte Stellung gebracht, d. h. der Sekundärwärmetauscher 2 wird wieder durchströmt, um die im Abgas nach dem Primärwärmetauscher 1 noch vorhandene Restwärme dem Heizkreis 4 zuführen zu können.

### Bezugszeichenliste

- 1: Primärwärmetauscher
- 2: Sekundärwärmetauscher
- 3: Brenner
- 4: Heizkreis
- 5: Stellventil
- 6: Vorlaufanschluss (Heizkreis)
- 7: Vorlaufanschluss (Primärwärmetauscher)
- 8: Rücklaufanschluss (Heizkreis)
- 9: erste Verbindungsleitung
- 10: zweite Verbindungsleitung
- 11: Rücklaufanschluss (Primärwärmetauscher)
- 12: Rücklaufanschluss (Sekundärwärmetauscher)
- 13: dritte Verbindungsleitung
- 14: Verbindungsstelle
- 15: Rückschlagventil

## Patentansprüche

1. Heizkessel, umfassend einen im Betrieb ein heißes Abgas abgebenden Brenner (3), einen vom Abgas umströmten Primärwärmetauscher (1) und einen nachgeschaltet vom Abgas umströmten Sekundärwärmetauscher (2), wobei der Primär-(1) und der Sekundärwärmetauscher (2) einen Teil eines Heizkreises (4) bilden,
**dadurch gekennzeichnet,**
**dass** am Heizkreis (4) zur hydraulischen Auskopplung des Sekundärwärmetauschers (2) aus dem Heizkreis (4) bei Stillstand des Brenners (3) ein Stellventil (5) vorgesehen ist.

2. Heizkessel nach Anspruch 1, wobei der Heizkreis (4) einen Vorlaufanschluss (6) aufweist,
**dadurch gekennzeichnet,**
**dass** der Vorlaufanschluss (6) hydraulisch mit einem Vorlaufanschluss (7) des Primärwärmetauscher (1) verbunden ist.

3. Heizkessel nach Anspruch 1 oder 2, wobei der Heizkreis (4) einen Rücklaufanschluss (8) aufweist,
**dadurch gekennzeichnet,**
**dass** das Stellventil (5) am Rücklaufanschluss (8) angeordnet ist.

4. Heizkessel nach Anspruch 3,
**dadurch gekennzeichnet,**
**dass** das am Rücklaufanschluss (8) angeordnete Stellventil (5) eine erste hydraulische Verbindungsleitung (9) zum Primärwärmetauschers (1) und eine zweite hydraulische Verbindungsleitung (10) zum Sekundärwärmetauscher (2) aufweist.

5. Heizkessel nach Anspruch 4,
**dadurch gekennzeichnet,**
**dass** die erste hydraulische Verbindungsleitung (9) mit einem Rücklaufanschluss (11) des Primärwärmetauschers (1) verbunden ist.

6. Heizkessel nach Anspruch 4 oder 5,
**dadurch gekennzeichnet,**
**dass** die zweite hydraulische Verbindungsleitung (10) mit einem Rücklaufanschluss (12) des Sekundärwärmetauschers (2) verbunden ist.

7. Heizkessel nach einem der Ansprüche 4 bis 6,
**dadurch gekennzeichnet,**
**dass** der Sekundärwärmetauscher (2) über eine dritte Verbindungsleitung (13) mit der ersten Verbindungsleitung (9) zwischen dem Stellventil (5) und dem Primärwärmetauscher (1) verbunden ist.

8. Heizkessel nach Anspruch 7,
**dadurch gekennzeichnet,**
**dass** die dritte Verbindungsleitung (13) an einer Verbindungsstelle (14) in die erste Verbindungsleitung (9) ausmündend ausgebildet ist.

9. Heizkessel nach Anspruch 8,
**dadurch gekennzeichnet,**
**dass** zwischen dem Stellventil (5) und der Verbindungsstelle (14) ein eine Strömung in Richtung Stellventil (5) unterbindendes Rückschlagventil (15) angeordnet ist.

10. Heizkessel nach Anspruch 3,
**dadurch gekennzeichnet,**
**dass** das Stellventil (5) in einer ersten Stellung den Rücklaufanschluss (8) des Heizkreises (4) ausschließlich mit dem Primärwärmetauscher (1) und in einer zweiten Stellung sowohl mit dem Primär- (1) als auch mit dem Sekundärwärmetauscher (2) verbindend ausgebildet ist.

11. Heizkessel nach einem der Ansprüche 1 bis 10,
**dadurch gekennzeichnet,**
**dass** das Stellventil (5) als Kugelventil ausgebildet ist.

12. Heizkessel nach einem der Ansprüche 1 bis 11, wobei zur Regelung des Heizkessels eine Heizungsregelung vorgesehen ist,
**dadurch gekennzeichnet,**
**dass** das Stellventil (5) mit der Heizungsregelung verschaltet ist.

13. Verfahren zum Betrieb eines Heizkessels nach einem der Oberbegriffe der Ansprüche 1 bis 12,
**dadurch gekennzeichnet,**
**dass** der Sekundärwärmetauscher (2) bei Stillstand des Brenners (3) hydraulisch aus dem Heizkreis (4) ausgekoppelt wird.
